# FASCICULE DE BREVET EUROPEEN

(11) **EP 3 827 473 B1**
(45) Date de publication et mention de la délivrance du brevet: **04.09.2024**
(21) Numéro de dépôt: 20740414.6
(22) Date de dépôt: 14.07.2020
(51) Int. Cl.: H01P 1/211, H01P 11/00

(54) **FILTRE À GUIDE D'ONDES ADAPTÉ POUR UN PROCÉDÉ DE FABRICATION ADDITIVE**
WELLENLEITERFILTER FÜR EIN GENERATIVES FERTIGUNGSVERFAHREN
WAVEGUIDE FILTER SUITABLE FOR AN ADDITIVE MANUFACTURING METHOD

(30) Priorité: 15.07.2019 FR 1907958
(43) Date de publication de la demande: 02.06.2021
(73) Titulaire: SWISSto12 SA, 1020 Renens (CH)
(72) Inventeur: CAPDEVILA CASCANTE, Santiago, 1020 Renens (CH); DEBOGOVIC, Tomislav, 1071 Chexbres (CH); MENARGUES GOMEZ, Esteban, 1028 Préverenges (CH)
(74) Mandataire: P&TS SA (AG, Ltd.)
(86) Numéro de dépôt international: PCT/IB2020/056590
(87) Numéro de publication internationale: WO 2021/009667

(56) Documents cités:
- FR-A1- 2 889 358
- US-A- 5 600 740
- US-A1- 2010 308 938
- US-A1- 2014 266 961
- ARNEDO I ET AL: "Spurious removal in satellite output multiplexer power filters", MICROWAVE CONFERENCE, 2007. EUROPEAN, IEEE, PI, 9 October 2007 (2007-10-09), pages 67 - 70, XP031191735, ISBN: 978-2-87487-001-9, DOI: 10.1109/EUMC.2007.4405127
- SHEN JUNYU ET AL: "Additive Manufacturing of Complex Millimeter-Wave Waveguides Structures Using Digital Light Processing", IEEE TRANSACTIONS ON MICROWAVE THEORY AND TECHNIQUES, PLENUM, USA, vol. 67, no. 3, 4 January 2019 (2019-01-04), pages 883 - 895, XP011712909, ISSN: 0018-9480, [retrieved on 20190305], DOI: 10.1109/TMTT.2018.2889452
- PEVERINI OSCAR A ET AL: "Selective Laser Melting Manufacturing of Microwave Waveguide Devices", PROCEEDINGS OF THE IEEE, IEEE. NEW YORK, US, vol. 105, no. 4, 2 January 2017 (2017-01-02), pages 620 - 631, XP011643483, ISSN: 0018-9219, [retrieved on 20170322], DOI: 10.1109/JPROC.2016.2620148
- OSCAR A. PEVERINI ET AL: "Additive manufacturing of Ku/K-band waveguide filters: a comparative analysis among selective-laser melting and stereo-lithography", IET MICROWAVES, ANTENNAS & PROPAGATION, vol. 11, no. 14, 19 November 2017 (2017-11-19), United Kingdom, pages 1936 - 1942, XP055532398, ISSN: 1751-8725, DOI: 10.1049/iet-map.2017.0151

## Description

### Domaine technique

La présente invention concerne un dispositif à guide d'ondes et plus particulièrement un filtre à guide d'ondes adapté pour un procédé de fabrication additive. L'invention concerne également un procédé de fabrication additive d'un tel filtre.

### Etat de la technique

Les signaux radiofréquence (RF) peuvent se propager soit dans l'espace, soit dans des dispositifs à guide d'ondes. Les filtres à guide d'ondes sont des dispositifs à guide d'ondes utilisés pour manipuler les signaux RF dans le domaine fréquentiel. On trouve des exemples d'utilisation de filtres hyperfréquences notamment dans les communications par satellite.

Il existe un large éventail de différents types de filtre de guide d'ondes. Par exemple, les filtres à guide d'ondes ondulé, aussi appelés filtres à guide d'ondes striés, comportent un canal muni d'un certain nombre de crêtes, ou dents, qui réduisent périodiquement la hauteur interne du guide d'onde. Ils sont utilisés dans des applications qui nécessitent simultanément une large bande passante, une bonne adaptation de la bande passante et une large bande d'arrêt. Il s'agit essentiellement de modèles passe-bas contrairement à la plupart des autres formes qui sont généralement du type passe-bande. La distance entre les dents est beaucoup plus petite que la distance typique λ/4 entre les éléments d'autres types de filtres.

US5600740 décrit un filtre à guide d'ondes passe-bande dont le canal est muni d'ondulations sinusoïdales avec un changement abrupt de phase en un point. Les ondulations sont réalisées par déposition métallique sur une âme lisse, ce qui limite la hauteur maximale des ondulations qui peut être réalisée avec un temps et un coût de déposition donné. La fabrication de l'âme est également complexe.

US2014/266961 décrit un filtre à guide d'ondes muni de parois d'épaisseur constante. La section de canal change de dimension le long du chemin de propagation de l'onde, ce qui permet de filtrer ou d'appliquer une fonction de transformation à cette onde. La réalisation d'un tel guide d'onde monolithique en métal est complexe.

US2010/308938 décrit un filtre à guide d'onde passe-bas dont les parois d'épaisseur sensiblement constantes comportent des oscillations de hauteur variable pour filtrer le signal et rejeter différentes bandes de fréquence. La réalisation d'un tel guide d'onde en métal est également très complexe.

ARNEDO ET AL, « Spurious removal in satellite output multiplexer power filters », European Microwave Conference, 9 octobre 2007, XP031191735 décrit un autre guide d'ondes dont les parois d'épaisseur sensiblement constantes forment des oscillations. La fabrication de ce guide d'onde nécessite de nombreuses étape de découpage laser, électroformage, électrodéposition, et attaque acide.

FR2889358 est autre exemple de filtre à guide d'ondes avec des parois ondulées et d'épaisseur constantes. Ce document ne décrit pas comment ce filtre de forme complexe peut être fabriqué.

Les guides d'ondes en matériau conducteur ci-dessus peuvent être fabriqués par extrusion, pliage, découpage, électroformage par exemple. La réalisation de guides d'ondes avec des sections complexes, notamment les filtres à guide d'ondes striés, par ces méthodes de fabrication conventionnelles, est difficile et coûteuse.

Des travaux récents ont cependant démontré la possibilité de réaliser des guides d'ondes, y compris des filtres, à l'aide de méthodes de fabrication additive. On connaît en particulier la fabrication additive de guides d'ondes formés dans des matériaux conducteurs.

Des guides d'ondes comportant des parois en matériaux non conducteurs, tels que des polymères ou des céramiques, fabriqués par une méthode additive puis recouvertes d'un placage métallique ont également été proposés. Par exemple, US2012/00849 propose de réaliser des guides d'ondes par impression 3D. A cet effet, une âme en plastique non conducteur est imprimée par une méthode additive puis recouverte d'un placage métallique par électrodéposition. Les surfaces internes des guides d'ondes doivent en effet être conductrice électriquement pour opérer.

Un autre exemple de procédé de fabrication de guides d'ondes par impression 3D est décrit dans SHEN ET AL, « Additive Manufacturing of Complex Millimeter-Wave Waveguides Structures Using Digital Light Processing», Transactions on microwave theory and techniques, 4 janvier 2019, XP011712909, décrit un pocédé d'impression de guide d'ondes de forme complexe par fabrication additive.

L'utilisation d'une âme non conductrice permet, d'une part, de réduire le poids et le coût du dispositif et, d'autre part, de mettre en oeuvre des méthodes d'impression 3D adaptées aux polymères ou aux céramiques et permettant de produire des pièces de haute précision avec une faible rugosité de paroi.

On connaît aussi dans l'état de la technique des guides d'onde comportant une âme métallique réalisée en impression 3D ; dans ce cas, la fabrication additive permet notamment une grande liberté dans les formes qui peuvent être réalisées.

La fabrication additive est typiquement réalisée par couches successives parallèles à la section transversale du filtre, l'axe longitudinal de l'ouverture à travers le guide d'onde étant ainsi vertical lors de l'impression. Cette disposition permet de garantir la forme de l'ouverture, et d'éviter la déformation qui se produirait suite à l'affaissement de la paroi supérieure de l'ouverture avant le durcissement dans le cas d'une impression selon une direction différente.

Certains filtres à guide d'ondes, en particulier les filtres à guide d'ondes munis de cavités résonantes (corrugated waveguide filter), de par leur forme, sont toutefois difficiles à fabriquer par des méthodes de fabrication additive. En effet, des tentatives de fabrication par un procédé de fabrication additive ont révélé que certaines parties du filtre à guide d'ondes peuvent se trouver en porte-à-faux, en particulier les parois des cavités ou les dents des filtres à guide d'ondes ondulés. Ces parties en porte-à-faux peuvent par conséquent s'affaisser sous l'effet de la gravité lors du processus de fabrication.

Il est dès lors nécessaire d'interrompre le procédé de fabrication additive au cours du processus de fabrication afin d'ajouter des renforts de sorte à assurer la stabilité de la structure à imprimer, ce qui peut s'avérer compliqué et fastidieux et peut avoir un impact non négligeable sur la vitesse et la maîtrise de la fabrication de ce type de filtres par des méthodes additives.

Un but de la présente invention est par conséquent de proposer un procédé de fabrication de filtre à guide d'ondes qui soit exempt des limitations ci-dessus, et en particulier un procédé de fabrication permettant de réaliser des filtres à guide d'ondes de manière fiable, aisée et rapide.

Un autre but de la présente invention de proposer un filtre à guide d'ondes qui soit mieux adapté à un procédé de fabrication additive.

### Bref résumé de l'invention

Selon l'invention, ces buts sont atteints notamment au moyen d'un procédé de fabrication d'un filtre à guide d'ondes comportant :
fabrication additive d'une âme comprenant au moins une face externe et des faces internes délimitant un canal pour filtrer et guider les ondes, au moins une dite face interne comportant une pluralité de créneaux afin de filtrer les ondes traversant le canal ;
déposition d'une couche de métal sur lesdites faces internes de l'âme ;
dans lequel l'axe longitudinal du canal du filtre à guide d'onde est orienté à la verticale lors de sa fabrication, chaque créneau comportant ainsi une face supérieure en porte-à-faux lors de la fabrication ;
la face en porte-à-faux desdits créneaux étant non horizontale lors de la fabrication de l'âme.

Ainsi, la facilité de fabrication provient à la fois d'un procédé de fabrication particulier (fabrication additive, avec l'axe longitudinal en position verticale) et d'une conception particulière des créneaux pour éviter les portions en porte-à-faux.

Les créneaux forment des cavités ou sections de filtrage.

Les créneaux sont formés dans l'âme du guide d'onde puis recouverts d'une couche électroconductrice.

Des tests et des simulations ont démontré, de manière inattendue, que la forme des créneaux avec une face supérieure oblique ne limite pas les possibilités de réaliser des filtres avec des réponses en fréquence quelconques dans un encombrement donné. En d'autres mots, les filtres ainsi fabriqués sont tout aussi efficaces que les filtres de l'art antérieur.

Au moins une face externe de l'âme est avantageusement dépourvue de créneaux. Cela permet de faciliter la fabrication du filtre dont les faces externes sont ainsi dépourvues de sections en porte-à-faux, au moins en regard des créneaux dans le canal. Cela permet aussi de renforcer, si nécessaire, l'âme du filtre, ou de lui donner une forme choisie en fonction de contraintes de poids et de rigidité, et indépendamment de la fonction de transfert du canal.

Les parois de l'âme peuvent ainsi avoir une épaisseur variable.

Dans un mode de réalisation, deux créneaux adjacents sont séparés l'un de l'autre par une dent en saillie dans ledit canal, ladite dent comportant une face inférieure et une face supérieure, la face inférieure étant inclinée par rapport à la face supérieure et par rapport à l'horizontale lors de la fabrication additive de l'âme.

La face inférieure de chaque dent forme avantageusement un angle (α) compris entre 20° et 80°, de préférence entre 20° et 40° par rapport à l'horizontale lors de la fabrication de l'âme.

Les dents peuvent être triangulaires.

Les dents peuvent être trapézoïdales.

Dans un mode de réalisation, lesdits créneaux comportent une face inférieure et une face supérieure, la face supérieure étant inclinée par rapport à la face supérieure et par rapport à l'horizontale lors de la fabrication additive de l'âme.

Le canal présente avantageusement une section transversale carrée ou rectangulaire orthogonale à son axe longitudinal, les créneaux étant agencés le long d'exactement deux parois opposées du canal.

Les créneaux agencés le long d'une paroi du canal sont avantageusement alignés en face des créneaux agencés le long de la paroi opposée du canal.

Le filtre ne comporte dans ce cas pas de symétrie axiale mais uniquement une symétrie planaire.

Le canal présente par exemple une section transversale carrée ou rectangulaire orthogonale à son axe longitudinal, les créneaux étant agencés le long d'une seule paroi du canal.

Le filtre ne comporte dans ce cas ni symétrie axiale ni symétrie planaire.

Le filtre à guide d'ondes peut comporter une strie agencée le long d'une paroi du canal qui est dépourvue de créneaux.

L'invention concerne aussi un filtre à guide d'ondes obtenu par le procédé ci-dessus.

L'âme peut être formée d'un matériau conducteur.

L'âme peut être est formée d'un matériau non conducteur. Dans ce cas, lesdites faces internes sont recouvertes d'une couche de métal.

La face inclinée de chaque dent ou créneau est de préférence oblique par rapport à un plan orthogonal à l'axe longitudinal du canal.

Selon une forme d'exécution, le filtre à guide d'ondes comporte au moins trois créneaux sur une seule paroi du canal ou sur chacune de deux parois opposées du canal.

Selon une forme d'exécution, la face inclinée de chaque créneau est une face de révolution s'étendant sur 360° autour de l'axe longitudinal du canal.

Selon une forme d'exécution, l'âme est obtenue par fabrication additive SLM (*Selective Laser Melting*).

L'invention a aussi pour objet un filtre à guide d'ondes comportant une âme comprenant au moins une face externe et des faces internes délimitant un canal pour filtrer et guider les ondes. Le canal comporte plusieurs créneaux comportant chacune une première et une seconde face. La première face est inclinée par rapport à la seconde face.

### Brève description des figures

Des exemples de mise en oeuvre de l'invention sont indiqués dans la description illustrée par les figures annexées dans lesquelles :
- la figure 1 illustre une section longitudinale le long d'un filtre à guide d'ondes selon une forme d'exécution de l'invention ;
- la figure 2 est une vue de dessus du filtre à guide d'ondes de la figure 1 ;
- la figure 3 illustre une section longitudinale le long d'un filtre à guides d'ondes selon une autre forme d'exécution ;
- la figure 4 est une vue de dessus de la figure 3 ;
- la figure 5 illustre une section longitudinale le long d'un filtre à guides d'ondes selon une autre forme d'exécution ;
- la figure 6 est une vue de dessus de la figure 5 ;
- la figure 7 illustre une section longitudinale le long d'un filtre à guides d'ondes selon une autre forme d'exécution ;
- la figure 8 est une vue de dessus de la figure 7 ;
- la figure 9 illustre une section longitudinale le long d'un filtre à guides d'ondes selon une autre forme d'exécution ;
- la figure 10 illustre une section longitudinale le long d'un filtre à guides d'ondes selon une autre forme d'exécution ;
- la figure 11 illustre une section longitudinale le long d'un filtre à guides d'ondes selon une autre forme d'exécution ;
- la figure 12 illustre une vue en perspective d'une portion de filtre à guides d'ondes découpé longitudinalement pour l'illustration, selon une autre forme d'exécution, et
- la figure 13 illustre une vue en perspective d'une portion de filtre à guides d'ondes dont une des parois a été retirée pour l'illustration, selon une autre vue de la forme d'exécution de la figure 12.

### Exemple(s) de mode de réalisation de l'invention

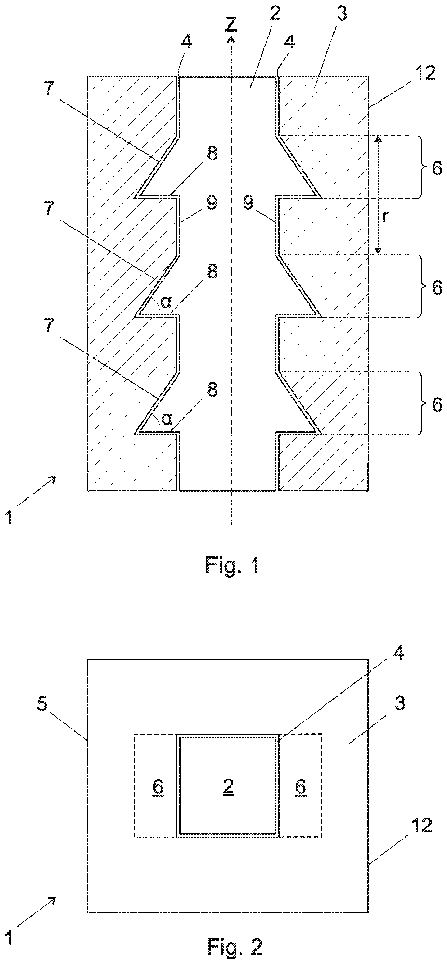

Le filtre à guide d'ondes selon la forme d'exécution illustrée par les figures 1 et 2 comporte une âme 3 comprenant plusieurs faces internes 7, 8, 9 qui sont recouvertes d'un film métallique 4 et qui délimitent un canal 2 configuré pour filtrer un signal électromagnétique selon une bande passante et une bande de fonctionnement prédéfinies. Par exemple, le filtre est prévu pour laisser passer une bande passante étroite à l'intérieur d'une plage de fréquence de l'ordre de 1GHz - 80 GHz

L'âme 3 comporte une face externe 12 dont la forme s'apparente par exemple à un prisme droit alors que le canal 2 comporte plusieurs créneaux 6 ou ondulations, c'est-à-dire des cavités formant des sections de filtrage 6. Les créneaux ou ondulations s'étendent radialement autour du canal 2 dont ils élargissent ainsi le diamètre dans plusieurs sections longitudinales. La section des créneaux 6 est en forme de triangle rectangle dans la coupe de la figure 1. Les créneaux 6 adjacents sont espacés longitudinalement deux par deux par un pas p.

La forme géométrique de l'âme 3 est déterminée de sorte que les proportions, la forme et la position des divers créneaux 6 du canal 2 le long de son axe longitudinal z soient configurées en fonction de la fréquence du signal électromagnétique à transmettre ou à filtrer.

La forme géométrique de l'âme 3 peut par exemple être déterminée par un logiciel de calcul en fonction de la bande passante désirée. La forme géométrique calculée peut être stockée dans un support de données informatiques.

L'âme 3 est fabriquée par un procédé de fabrication additive. Dans la présente demande, l'expression «fabrication additive » désigne tout procédé de fabrication de l'âme 3 par ajout de matière, selon les données informatiques stockées sur le support informatique et définissant la forme géométrique de l'âme 3.

L'âme 3 peut par exemple être fabriquée par un procédé de fabrication additive du type SLM (Selective Laser Melting). L'âme 3 peut aussi être fabriquée par d'autres méthodes de fabrication additives, par exemple par durcissement ou coagulation de liquide ou de poudre notamment, y compris sans limitation des méthodes basées sur la stéréolithographie, les jets d'encre (binder jetting), DED (Direct Energy Déposition), EBFF (Electron Beam Freedom Fabrication), FDM (Fused Déposition Modeling) PFF (Plastic Free Forming), par aérosols, BPM (Ballistic Particle Manufacturing), SLS (Selective Laser Sintering), ALM (Additive Layer Manuafcturing), polyjet, EBM (Electron Beam Melting, photopolymérisation, etc.

L'âme 3 peut par exemple être en photopolymère fabriquée par plusieurs couches superficielles de polymère liquide durcies par un rayonnement ultraviolet au cours d'un procédé de fabrication additive.

L'âme 3 peut également être formée d'un matériau conducteur, par exemple un matériau métallique, par un procédé de fabrication additive du type SLM dans lequel un laser ou un faisceau d'électrons vient fondre ou fritter plusieurs couches fines d'un matériau poudreux.

Selon une forme d'exécution, la couche de métal 4 est déposée sous forme de film par électrodéposition ou galvanoplastie sur les faces internes 7, 8, 9 de l'âme 3. La métallisation permet de recouvrir les faces interne de l'âme 3 par une couche conductrice.

L'application de la couche de métal peut être précédée par une étape de traitement de surface des faces internes 7, 8, 9 de l'âme 3 afin de favoriser l'accrochage de la couche de métal. Le traitement de surface peut comporter une augmentation de la rugosité de surface, et/ou la déposition d'une couche intermédiaire d'accrochage.

Les procédés de fabrication additives conventionnels ne sont toutefois pas particulièrement bien adaptés pour des filtres à guide d'ondes conventionnels, en particulier les filtres à guide d'ondes striés qui comportent un certain nombre de cavités 6, puisque l'agencement de ces cavités crée des portions en porte-à-faux dans le canal 2, qui sont difficiles à maintenir lors de l'impression des différentes strates. Des renforts pour ces portions en porte-à-faux doivent par conséquent être placés au cours du processus de la fabrication additive afin d'éviter que ces parties s'affaissent sous l'effet de la gravité.

Selon un aspect, et afin de remédier à cet inconvénient, le guide d'onde 1 est imprimé avec l'axe longitudinal z du canal 2 en position verticale, ou du moins sensiblement verticale.

Selon un autre aspect, les créneaux 6 du canal 2 sont conçus de manière à faciliter cette impression additive en position verticale. A cet effet, le canal 2 du filtre à guide d'ondes 1 comporte plusieurs créneaux 6 séparés les uns des autres par des portions 9 du canal 2.

Chaque créneau ou ondulation 6 comporte ainsi une face qui est en porte-à-faux lors de la fabrication du filtre en position verticale. Dans l'exemple de la figure 1, la face supérieure 7 des créneaux 6 est en porte-à-faux lors de sa fabrication additive. La seconde face inférieure 8 des créneaux 6 s'étend quant à elle dans un plan sensiblement perpendiculaire à l'axe longitudinal du canal 2, c'est-à-dire un plan horizontal lors de la fabrication.

Afin de permettre l'impression additive, la face supérieure en porte-à-faux 7 est inclinée par rapport à la face inférieure 8 et par rapport à l'horizontale en position verticale de fabrication. Dans un mode de réalisation préférentiel, la face 7 forme un angle α par rapport à la seconde face 8 qui est compris entre 20° et 80° et de préférence entre 20° et 40°.

La configuration géométrique du filtre à guide d'ondes 1 selon cet exemple d'exécution a l'avantage de permettre la réalisation de l'âme 3 par un procédé de fabrication additive dans une direction verticale opposée à la gravité sans avoir recours, au cours du processus de fabrication de l'âme 3, à un quelconque renfort destiné à éviter un affaissement d'une partie de l'âme sous l'effet de la gravité. En effet, de préférence, l'angle α des faces 7 en porte-à-faux par rapport à l'horizontale est suffisant pour permettre l'adhérence des couches superposées avant leur durcissement lors de l'impression.

Selon la figure 1, les créneaux 6 sont agencés le long de deux parois opposées du canal 2, lequel présente une section transversale carrée ou rectangulaire selon un plan perpendiculaire à l'axe longitudinal z du canal 2.

Il est à noter toutefois que le sens d'impression du filtre à guide d'ondes 1 est primordial et doit se faire selon son orientation illustrée à la figure 1 puisqu'une impression dans le sens inverse générerait des problèmes de stabilité de la structure dans les régions en porte-à-faux définie par la face 8.

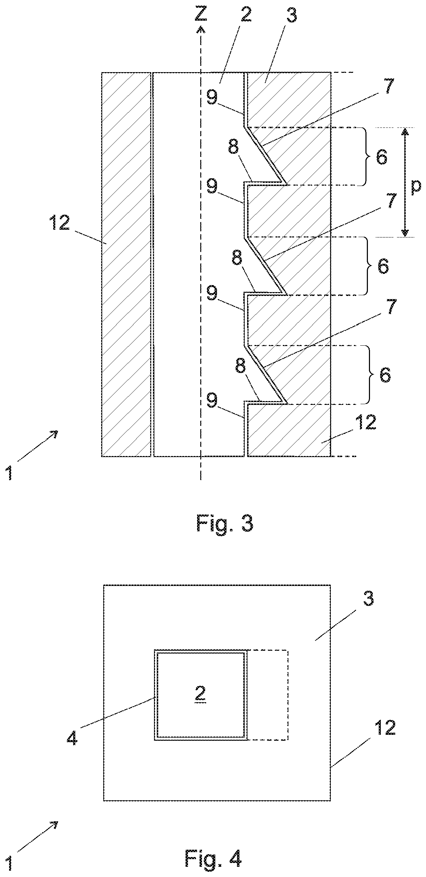

D'autres configurations géométriques du filtre à guide d'ondes, selon l'invention, présentant les avantages susmentionnés sont illustrés par les figures 3 à 13.

Selon les figures 3 et 4, le filtre à guide d'ondes 1 comporte une âme 3 avec un canal 2 de section carrée ou rectangulaire le long de son axe longitudinal et des créneaux 6 identiques ou similaires à la forme d'exécution illustrée par les figures 1 et 2 mais uniquement agencées le long d'une des quatre parois du canal 2.

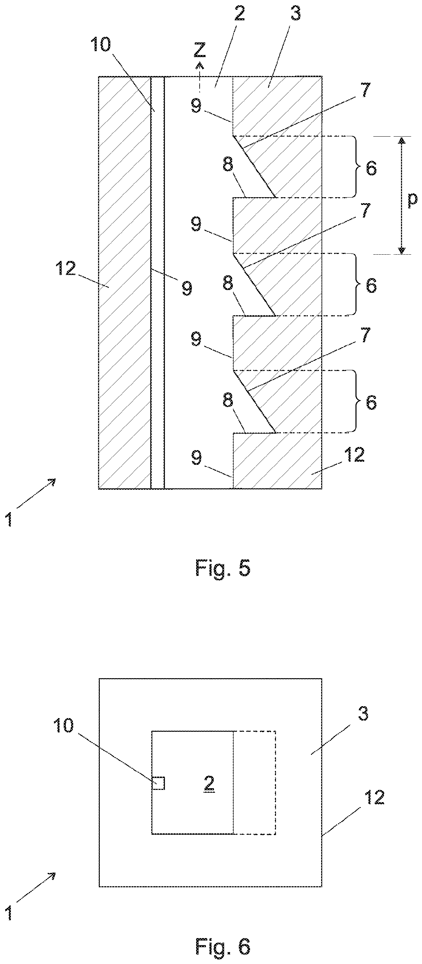

Selon la forme d'exécution illustrées par les figures 5 et 6, le filtre à guide d'ondes 1 s'apparente au filtre 1 selon les figures 3 et 4 à la différence qu'il comporte en outre une nervure (strie) 10 ou un septum agencée le long d'un côté du canal 2 qui est opposé au côté comportant les créneaux 6. Cette strie influence également les modes de transmission de l'onde dans le canal. La strie 10 peut s'étendre sur toute la longueur du canal 2, comme dans l'exemple illustré, ou sur une portion de sa longueur. Sa hauteur peut être constante ou variable.

Il est aussi possible de prévoir une strie 10 sur une paroi du canal 2 autre que la paroi opposée aux cavités 6. Il est aussi possible de prévoir plusieurs stries 10, par exemple des stries placées sur différentes parois du canal 2.

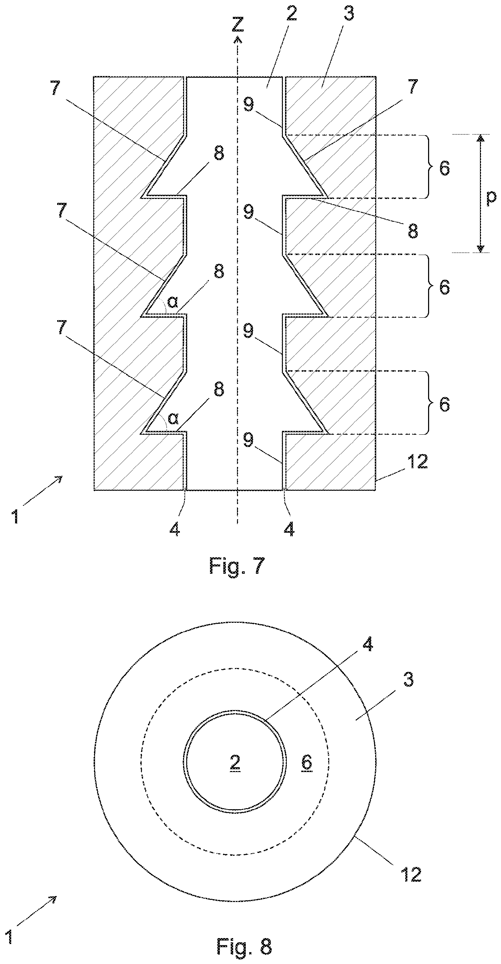

Dans une autre forme d'exécution, illustrée par les figures 7 et 8, le filtre à guide d'ondes 1 comporte une âme 3 de forme externe 12 cylindrique avec un canal 2 cylindrique et des créneaux annulaires 6 le long du canal 2. La face en porte-à-faux 7 et la face inférieure 8 sont également annulaires.

Il est aussi possible de réaliser un guide d'onde de section elliptique ou ovale.

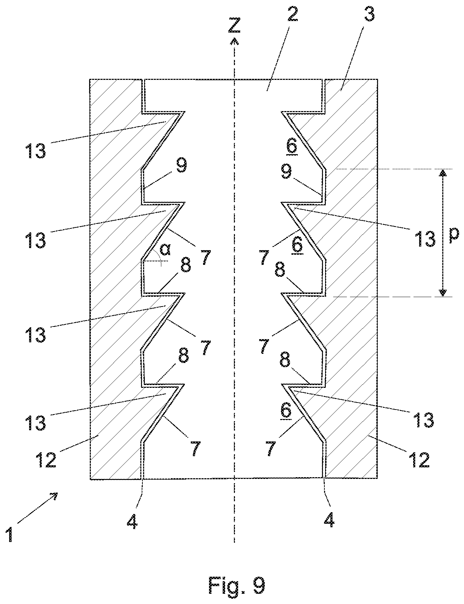

Selon la forme d'exécution illustrée par la figure 9, le filtre à guide d'ondes 1 comporte une âme 3 avec un canal 2 muni de dents 13 qui s'étendent radialement depuis la paroi cylindrique ou prismatique du canal 2 vers l'axe longitudinal z. La face inférieure 7 des dents, en porte-à-faux, est oblique et forme un angle α par rapport à l'horizontale en position de fabrication additive, c'est-à-dire lorsque l'axe z est sensiblement vertical. L'angle α est de préférence compris entre 20° et 80° et de préférence entre 20° et 40°. La face supérieure 8 des dents 13 est sensiblement horizontale en position d'impression.

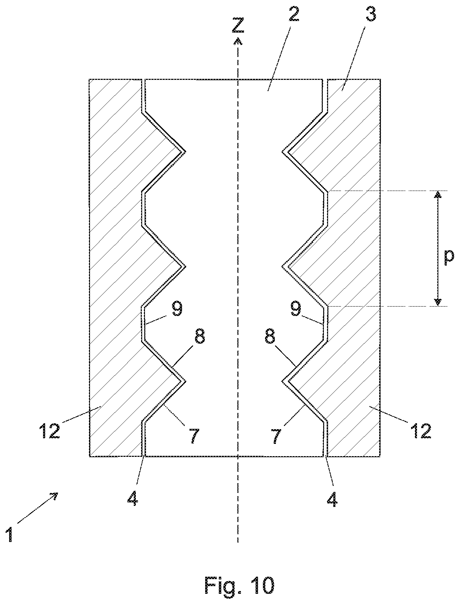

La forme d'exécution illustrées par la figure 10 est similaire à celle de la figure 9, si ce n'est que la face supérieure 8 des dents 13 est également oblique et forme un angle α par rapport à l'horizontale en position de fabrication additive, c'est-à-dire lorsque l'axe z est sensiblement vertical. Dans cet exemple, les deux faces 7 et 8 de dents sont symétriques par rapport au plan horizontal.

Les modes de réalisation des figures 9 à 10 comportent des dents sur deux parois opposées du canal 2 de section carrée ou rectangulaire. Il est cependant possible de prévoir des dents 13 sur une seule paroi. Il est aussi possible de munir une ou plusieurs autres parois d'une strie 10. La forme des dents en section peut être non polygonale, par exemple munie de faces arrondies. Enfin, des dents peuvent aussi être prévues sur un canal de section circulaire, elliptique ou ovale.

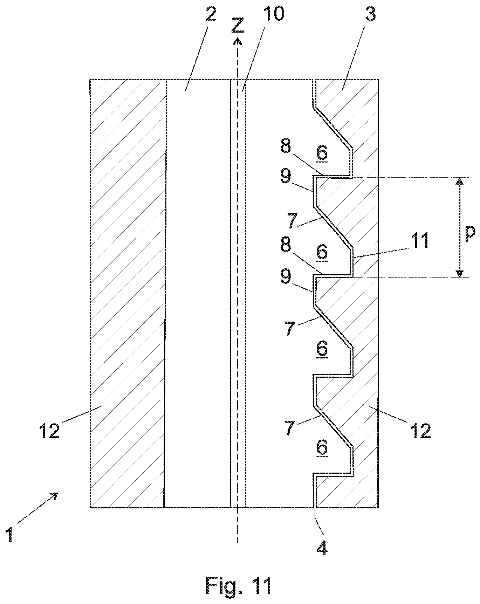

La forme d'exécution illustrées par la figure 11 est similaire à celle de la figure 5, si ce n'est que le fond 14 des créneaux 6 est tronqué et parallèle à l'axe z. Cet arrangement permet de réduire la profondeur des créneaux 6 et donc de renforcer l'âme 2.

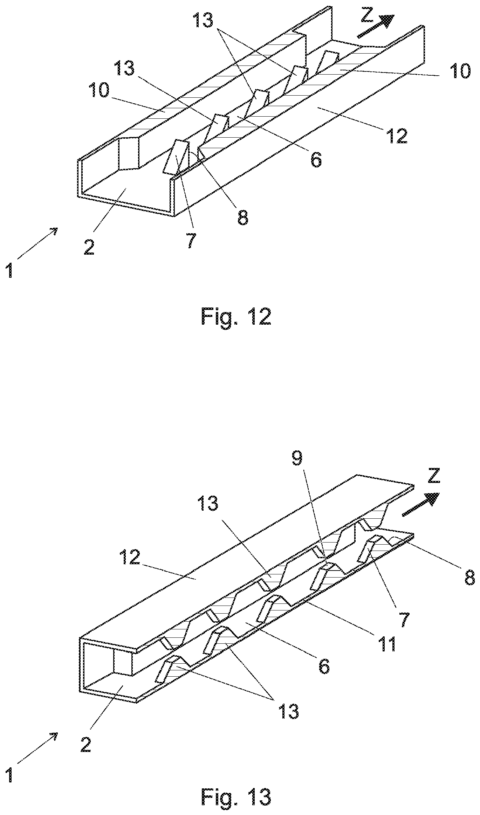

La forme d'exécution illustrées par les figures 12 et 13 est similaire à celle de la figure 9, si ce n'est que les deux parois latérales dépourvues de dents sont munies d'une strie 10 qui s'étend sur tout ou partie de la longueur du canal 2. Dans l'exemple illustré sur la figure 12, la strie s'arrête avant l'extrémité inférieure du canal 2 et son bord inférieur est donc non horizontal en position verticale de fabrication, afin de permettre son impression malgré le porte-à-faux.

Bien que le filtre à guide d'ondes selon la forme d'exécution illustrée comporte trois créneaux 6 séparés par deux dents 13 ou portions 9 du canal 2, un filtre comportant un nombre différent de créneaux ou de dents peut être implémenté selon la fonction de filtrage désirée.

Les créneaux 6 et les dents 13 illustrés sur les exemples ont des sections longitudinales polygonales, par exemple sous forme de triangle ou de trapèze. D'autres formes de créneaux ou de dents peuvent dépendant être imaginés, y compris par exemple des créneaux ou des dents dont la section comporte des portions arrondies (ondulations).

Les créneaux 6 et les dents 13 illustrés sur les exemples ont des dimensions et notamment des profondeurs respectivement des hauteurs constantes. Des créneaux et/ou des dents de profondeur et/ou hauteur variable peuvent cependant être réalisés. Par ailleurs, le pas p entre créneaux ou dents successifs peut être variable.

## Revendications

1. Procédé de fabrication d'un filtre à guide d'ondes (1) comportant :
fabrication additive d'une âme (3) comprenant au moins une face externe (12) et des faces internes délimitant un canal (2) pour filtrer et guider les ondes, deux faces internes opposées comportant chacune une pluralité de créneaux (6) afin de filtrer les ondes traversant le canal ;
déposition d'une couche de métal sur lesdites faces internes de l'âme ;
dans lequel l'axe longitudinal (z) du canal (2) du filtre à guide d'onde (1) est orienté à la verticale lors de sa fabrication, chaque créneau (6) comportant ainsi une face supérieure (7) en porte-à-faux lors de la fabrication ;
la face en porte-à-faux (7) desdits créneaux étant non horizontale lors de la fabrication de l'âme
**caractérisé en ce que** la pluralité de créneaux (6) de l'une des faces internes opposées est alignée par rapport à la pluralité de créneaux (6) de l'autre des faces internes opposées selon un plan de symétrie équidistant auxdites deux faces internes opposées.

2. Procédé selon la revendication 1, ladite au moins une face externe (12) étant dépourvue de créneaux.

3. Procédé selon l'une des revendications 1 ou 2, deux créneaux (6) adjacents étant séparés l'un de l'autre par une dent (13) en saillie dans ledit canal (2),
ladite dent (13) comportant une face inférieure (7) et une face supérieure (8), la face inférieure étant inclinée par rapport à la face supérieure et par rapport à l'horizontale lors de la fabrication additive de l'âme.

4. Procédé selon la revendication précédente, dans lequel la face inférieure (7) de chaque dent proéminente forme un angle (α) compris entre 20° et 80°, de préférence entre 20° et 40° par rapport à l'horizontale lors de la fabrication de l'âme.

5. Procédé selon l'une des revendications 1 ou 2, lesdits créneaux comportant une face inférieure (7) et une face supérieure (8), la face inférieure étant inclinée par rapport à la face supérieure et par rapport à l'horizontale lors de la fabrication additive de l'âme.

6. Procédé l'une des revendications 1 à 5, dans lequel le canal (2) présente une section transversale carrée ou rectangulaire orthogonale à son axe longitudinal.

7. Procédé selon l'une des revendications précédentes, **caractérisé en ce que** l'âme est obtenue par fabrication additive SLM.

## Patentansprüche

1. Verfahren zur Herstellung eines Wellenleiterfilters (1), umfassend:
additive Fertigung eines Kerns (3), welcher mindestens eine Aussenfläche (12) und Innenflächen umfasst, welche einen Kanal (2) zum Filtern und Führen der Wellen begrenzen, wobei zwei gegenüberliegenden Innenflächen jeweils eine Vielzahl von Zinnen (6) aufweist, um die durch den Kanal fliessenden Wellen zu filtern;
Aufbringen einer Metallschicht auf den Innenflächen des Kerns;
worin die Längsachse (z) des Kanals (2) des Wellenleiterfilters (1) bei seiner Herstellung vertikal ausgerichtet ist, wobei jede Zinne (6) somit bei der Herstellung eine überhängende Fläche (7) aufweist;
wobei die überhängende Fläche (7) der besagten Zinnen während der Herstellung des Kerns nicht horizontal ist,
**dadurch gekennzeichnet, dass** die Vielzahl von Zinnen (6) einer der gegenüberliegenden Innenflächen in Bezug auf die Vielzahl von Zinnen (6) der anderen der gegenüberliegenden Innenflächen gemäss einer zu den beiden gegenüberliegenden Innenflächen äquidistanten Symmetrieebene ausgerichtet ist.

2. Verfahren gemäss Anspruch 1, wobei die mindestens eine Aussenfläche (12) keine Zinnen aufweist.

3. Verfahren gemäss einem der Ansprüche 1 oder 2, wobei zwei benachbarte Zinnen (6) durch einen im besagten Kanal (2) hineinragenden Zahn (13) voneinander getrennt sind,
wobei der besagte Zahn (13) eine Unterseite (7) und eine Oberseite (8) aufweist, wobei die Unterseite während der additiven Fertigung des Kerns in Bezug auf die Oberseite und in Bezug auf die Horizontalebene geneigt ist.

4. Verfahren gemäss dem vorhergehenden Anspruch, worin die Unterseite (7) jedes hervorstehenden Zahns bei der Fertigung des Kerns einen Winkel (α) zwischen 20° und 80°, vorzugsweise zwischen 20° und 40°, in Bezug auf die Horizontalebene bildet.

5. Verfahren gemäss einem der Ansprüche 1 oder 2, wobei die besagten Zinnen eine Unterfläche (7) und eine Oberfläche (8) aufweisen,
wobei die Unterseite während der additiven Fertigung des Kerns in Bezug auf die Oberseite und in Bezug auf die Horizontalebene geneigt ist.

6. Verfahren gemäss einem der Ansprüche 1 bis 5, worin der Kanal (2) einen quadratischen oder rechteckigen Querschnitt orthogonal zu seiner Längsachse aufweist.

7. Verfahren gemäss einem der vorhergehenden Ansprüche, **dadurch gekennzeichnet, dass** der Kern durch additive SLM-Fertigung erzielt wird.

## Claims

1. A method for manufacturing a waveguide filter (1) comprising:
additive manufacturing of a core (3) comprising at least one external face (12) and internal faces defining a channel (2) for filtering and guiding the waves, two opposed internal faces comprising each a plurality of slots (6) in order to filter the waves passing through the channel;
depositing a metal layer onto said internal faces of the core;
wherein the longitudinal axis (z) of the channel (2) of the waveguide filter (1) is oriented vertically when it is manufactured, each slot (6) thus comprising an upper face (7) that is overhanging during manufacturing;
the overhanging face (7) of said slots being non-horizontal when the core is manufactured,
**characterized in that** the plurality of slots (6) of one of the opposed internal faces is aligned symmetrically with the plurality of slots of the other of the opposed internal faces with respect to a plane of symmetry equidistant from the two opposed internal faces.

2. Method according to claim 1, said at least one external face (12) being devoid of slots.

3. Method according to one of the claims 1 or 2, two adjacent slots (6) being separated from each other by a tooth (13) projecting into said channel (2), said tooth (13) comprising a lower face (7) and an upper face (8), the lower face being inclined in relation to the upper face and in relation to the horizontal during the additive manufacturing of the core.

4. Method according to the preceding claim, wherein the lower face (7) of each prominent tooth forms an angle (α) ranging between 20° and 80°, preferentially between 20° and 40° in relation to the horizontal during the manufacturing of the core.

5. Method according to one of the claims 1 or 2, said slots comprising a lower face (7) and an upper face (8), the lower face being inclined in relation to the upper face and in relation to the horizontal during the additive manufacturing of the core.

6. Method according to one of the claims 1 to 5, wherein the channel (2) has a square or rectangular transverse section orthogonal to its longitudinal axis.

7. Method according to one of the preceding claims, **characterized in that** the core is obtained by SLM additive manufacturing.
